# EUROPÄISCHE PATENTSCHRIFT

(11) **EP 0 879 159 B1**
(45) Veröffentlichungstag und Bekanntmachung des Hinweises auf die Patenterteilung: **24.05.2000**
(21) Anmeldenummer: 97914144.7
(22) Anmeldetag: 06.02.1997
(51) Int. Cl.: B60R 5/04

(54) **AUFROLLVORRICHTUNG ZUM WEGVERZÖGERNDEN ANHEBEN DER HUTABLAGE VON FAHRZEUGEN**
A REELING DEVICE FOR THE DELAYED LIFTING OF THE REAR PARCEL SHELF OF A VEHICLE
DISPOSITIF D'ENROULEMENT POUR LE SOULEVEMENT TEMPORISE DE LA PLAGE ARRIERE D'UN VEHICULE

(30) Priorität: 14.02.1996 DE 19605406
(43) Veröffentlichungstag der Anmeldung: 25.11.1998
(73) Patentinhaber: Reum Aktiengesellschaft, D-74736 Hardheim (DE)
(72) Erfinder: STANG, Rolf, D-74722 Buchen-Hainstadt (DE); SCHAUDER, Hubert, D-74838 Limbach (DE); MORSCHEK, Jürgen, D-74731 Walldürn (DE)
(74) Vertreter: Clemens, Gerhard, Dr.-Ing.
(86) Internationale Anmeldenummer: DE9700271
(87) Internationale Veröffentlichungsnummer: WO9729929

(56) Entgegenhaltungen:
- EP-A- 0 203 824
- DE-A- 2 659 684
- DE-U- 29 517 046
- FR-A- 2 222 852
- FR-A- 2 364 787
- FR-A- 2 565 176
- FR-A- 2 581 584

## Beschreibung

### TECHNISCHES GEBIET

Die vorliegende Erfindung betrifft eine Aufrollvorrichtung zum wegverzögernden Anheben einer um eine Achse schwenkbare Hutablage eines Fahrzeuges beim Öffnen der Heckklappe mit einer an der Hutablage des Fahrzeuges und an der Heckklappe des Fahrzeugs befestigbaren Kordel mit einer Anschlußeinheit zum lösbaren Befestigen der Kordel an der Heckklappe des Fahrzeugs, wobei die Kordel in einem an der Hutablage befestigbaren Gehäuse herausziehbar und zwar entgegen dem Einfluß elastischer Mittel angeordnet ist, und die Kordel einen elastischen Teilbereich besitzt, der die elastischen Mittel bildet, der elastische Teilbereich in dem der Anschlußeinheit gegenüberliegenden Endbereich der Kordel vorhanden ist.

### STAND DER TECHNIK

Es sind Aufrollvorrichtungen bekannt, die als einfache Kordeln oder als Gummiteil ausgebildet sind. Diese werden an der Hutablage und an der Heckklappe befestigt und bewirken, daß die Hutablage beim Öffnen der Heckklappe nach oben geschwenkt wird.

Eine Wegverzögerung wird dadurch erreicht, daß die Kordel unterhalb der Heckklappe an derselben befestigt ist und einen Anschlag besitzt, der erst nachdem die Heckklappe einen vorgebbaren Winkel geschwenkt worden ist, mit der Heckklappe zur Anlage kommt und diese dann beim weiteren Verschwenken der Heckklappe mitnimmt.

Derartige Einrichtungen haben den Nachteil, daß die Kordel in bestimmten Situationen frei im Raum vorhanden ist und dadurch ein Verhaken mit beispielsweise im Kofferraum des Fahrzeugs angeordneten Gegenständen eintreten kann. Darüberhinaus kann eine zuverlässige Wegverzögerung nicht gewährleistet werden, da die Kordel beim Schließen der Tür lediglich durch ihr Eigengewicht beaufschlagt wird, um in ihre Ausgangsposition zurückzufallen, was in bestimmten Situationen nicht ausreichend sein kann.

Die DE,A,2659684 offenbart eine Aufrollvorrichtung zum wegverzögerten Anheben einer um eine Achse schwenkbare Hutablage eines Fahrzeugs beim Öffnen der Heckklappe. Dabei ist an der Hutablage des Fahrzeugs und an der Heckklappe eine Kordel mit einer Anschlußeinheit lösbar befestigt, wobei die Kordel in einem der Hutablage befestigbaren Gehäuse herausziehbar entgegen der Wirkung von elastischen Mitteln angeordnet ist und im Innern eine Trommel angeordnet ist.

Die EP,A,236787 offenbart eine Aufrollvorrichtung zum Wegverzögern und Anheben einer Hutablage, wobei eine Kordel zum Einsatz kommt, die einen elastischen Teilbereich besitzt, wobei dieser elastische Teilbereich in dem der Anschlußeinheit gegenüberliegendem Endbereich der Kordel vorhanden ist.

### DARSTELLUNG DER ERFINDUNG

Der vorliegenden Erfindung liegt die Aufgabe bzw. das technische Problem zugrunde, eine verbesserte Vorrichtung zum wegverzögernden Anheben der Hutablage von Fahrzeugen beim Öffnen bzw. Schließen der Heckklappe anzugeben, die eine zuverlässige Wegverzögerung dauerhaft gewährleistet, wirtschaftlich hergestellt werden kann und eine einfache und zuverlässige Montage ermöglicht.

Die erfindungsgemäße Vorrichtung ist durch die Merkmale des unabhängigen Anspruchs 1 gegeben. Vorteilhafte Ausgestaltung und Weiterbildung sind Gegenstand der abhängigen Ansprüche.

Die erfindungsgemäße Aufrollvorrichtung zeichnet sich demgemäß dadurch aus, daß im Innern des Gehäuses eine Umlenkeinrichtung für die Kordel angeordnet ist und die Länge/Federkraft des elastischen Teilbereiches so ausgebildet ist, daß die Kordel bei nicht montierter Vorrichtung in das Gehäuseinnere und um die Umlenkeinrichtung herum bis zu einem Anschlag der Anschlußeinheit eingezogen ist. Durch die Unterbringung in einem Gehäuse und durch den Einsatz elastischer Mittel ist ein zuverlässiger Aufspul- bzw. Ausziehvorgang der Kordel problemlos möglich. Die Umlenkeinrichtung sorgt dafür, daß die Kordel in eingezogenem Zustand ordentlich ausgerichtet ist.

Eine derartige Vorrichtung bietet eine einfache Herstellbarkeit und Montage und gewährleistet darüberhinaus eine dauerhaft zuverlässige Funktion.

Es hat sich als günstig herausgestellt, die oben genannte Vorrichtung so weiterzubilden, daß die Umlenkeinrichtung eine ebene, spiralförmig verlaufende Wandung besitzt, daß zwischen den spiralförmigen Wandungen, die Führungsrinnen bilden, die Kordel angeordnet ist und der elastische Teilbereich im wesentlichen im Zentrum des spiralförmigen Wandungsverlaufs verankert ist. Um die Reibungskräfte zumindest im Bereich des elastischen Teilbereiches der Kordel bei umschlungener Wandung möglichst gering zu halten, sollte die Zahl der Windungen der Spirale nicht allzu groß gewählt werden.

Um die geometrische Ausziehlänge beim verzögerten Anheben der Hutablage beim Öffnen der Heckklappe eindeutig zu definieren, wird beim Übergang des elastischen Teilbereiches der Kordel zum übrigen Teil der Kordel eine Anschlageinheit angeordnet, die die maximale Ausziehlänge der Kordel begrenzt. Der Anschlag kann hierbei bevorzugt als Anschlagring ausgebildet sein, der an einen entsprechenden Gegenanschlag am Gehäuse in maximaler Ausziehlänge der Kordel in Kontakt kommt.

Eine zuverlässige Verankerung der Kordel im Gehäuse wird nach einem bevorzugten Ausführungsbeispiel dadurch gewährleistet, daß ein einrastbarer Nippel, insbesonderer umspritzter Nippel an dem einen Kordelende vorhanden ist, so daß auch die Montage derart vereinfacht wird, in den zu Verankerungszwecken der Kordel lediglich der Nippel an eine entsprechende Rasterausnehmung am Gehäuse eingerastet werden muß.

Gemäß einer besonders bevorzugten Ausgestaltung, die einen wirtschaftlichen Herstellungsvorgang ermöglicht, ist das Gehäuse zweiteilig ausgebildet, nämlich bestehend aus einem Grundelement, an dem die Kordel verankert wird und aus einem Deckelelement, das bevorzugt einrastbar an dem Grundelement ausgebildet ist.

Die Ausbildung des Gehäuses als Kunststoffbauteil, insbesondere gespritztes Kunststoffbauteil, ermöglicht für derartige Massenprodukte geringe Fertigungskosten.

Eine bevorzugte Ausgestaltung der erfindungsgemäßen Vorrichtung, bei der die an der Umlenkeinrichtung entstehenden Reibungskräfte beim Aus- bzw. Einziehvorgang möglichst gering gehalten werden können und die gleichzeitig eine wirtschaftliche Herstellung ermöglicht zeichnet sich dadurch aus, daß die Umlenkeinrichtung aus beabstandet zueinander geordneten Vorsprungseinheiten ausgebildet ist, um die die Kordel herumführbar ist.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1a, b, c: schematische Detailseitenschnittansicht eines Fahrzeugs im hinteren Bereich mit an die Hutablage über eine Kordel angeschlossener Heckklappe,
- Fig. 2: schematische Detailperspektive der Vorrichtung zum wegverzögernden Anheben mit einem Gehäuse mit spiralartiger Wandung und einer zweiteiligen Kordel mit einem elastischen Teilbereich, wobei die Vorrichtung ein Grundelement und ein Deckelelement besitzt, und
- Fig. 3: schematische Ansicht der Kordel der Vorrichtung gemäß Fig. 2.

### WEGE ZUM AUSFÜHREN DER ERFINDUNG

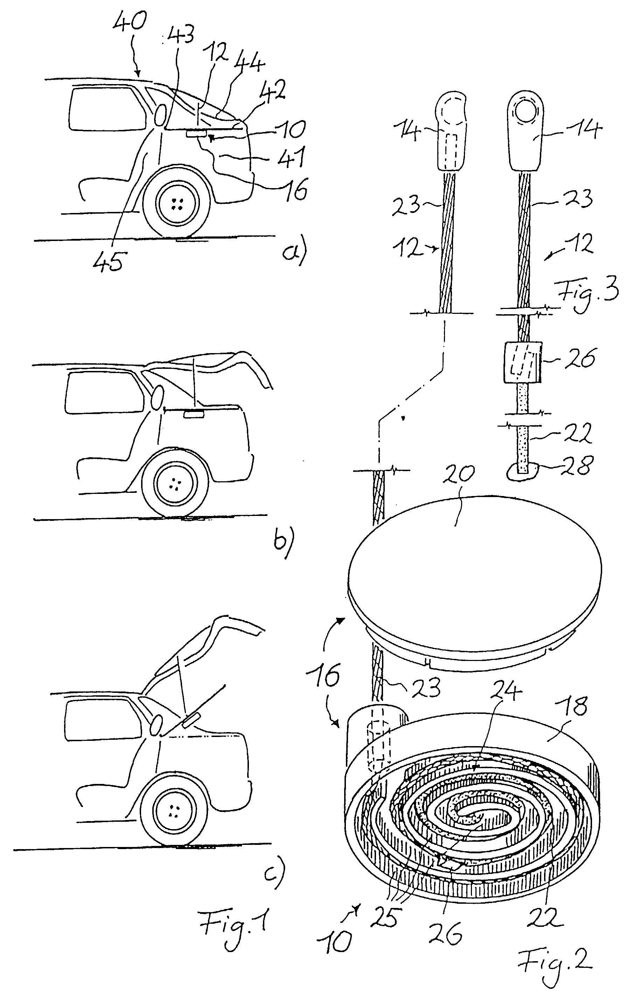

Ein Fahrzeug 40 mit Fließheck besitzt eine über dem Kofferraum 41 angeordnete Hutablage 42. Die Hutablage 42 ist bei geschlossener Heckklappe 44 im wesentlichen horizontal angeordnet. Die Hutablage 42 ist weiterhin um eine Drehachse 43, die sich im oberen Bereich des Rücksitzes 45 des Fahrzeugs 40 befindet vorhanden. Über eine Vorrichtung 10 (Fig. 2) zum wegverzögernden Anheben der Hutablage 42 beim Öffnen der Heckklappe 44 sind die Heckklappe 44 und die Hutablage 42 miteinander gekoppelt. Die Vorrichtung 10 besitzt ein Gehäuse 16 und eine Kordel 12. Das Gehäuse 16 ist unterseitig an der Hutablage 42 befestigt. Die Kordel 12 durchstößt die Hutablage 42 und ist ihrerseits an der Heckklappe 44 befestigt.

Die Vorrichtung 10 ist als Auf/Abrollautomatik-Vorrichtung ausgebildet. Gemäß Fig. la ist die Hutablage 42 bei geschlossener Heckklappe 44 horizontal angeordnet. Wird die Heckklappe 44 um einen gewissen Winkel - wie in Fig. 1b dargestellt - geöffnet, wird die Kordel 12 aus dem Gehäuse 16 herausgezogen, so daß die Hutablage 42 immer noch horizontal angeordnet ist. Bei weiterem Verschwenken bzw. Öffnen der Heckklappe 44 ist die Vorrichtung 10 nun so ausgebildet, daß ab diesem Zustand die Hutablage 42 an die weitere Drehung der Heckklappe 44 gekoppelt ist und sich um ihre Drehachse 43 nach oben verschwenkt. In der Position gemäß Fig. 1b können bei teilweise geöffneter Heckklappe 44 noch auf der Hutablage 42 befindliche Gegenstände entfernt werden. Bei Erreichen der Position gemäß Fig. lc ist die Hutablage 42 in ihre höchste Position geschwenkt und der Öffnungsquerschnitt des Kofferraums 41 zum Be- bzw. Entladen ist vergrößert.

In den Fig. 2 und 3 ist schematisch eine Ausführungsform der Vorrichtung 10 zum wegverzögernden Anheben der Hutablage 42 dargestellt. Das als Kunststoffspritzteil ausgebildete Gehäuse 16 besitzt ein Grundelement 18 und ein an dem Grundelement 18 einrastbares Deckelelement 20. An das Grundelement 18 sind ebene spiralförmige Wandungen 24 angeformt, die spiralförmige Führungsrinnen 25 bilden, zwischen denen die Kordel 12 angeordnet ist, so daß die Wandungen 24 praktisch als Umlenkeinheit 24 wirken.

Die Kordel 12 besteht aus zwei Bereichen. Einem elastischen Teilbereich 22 und einem übrigen Kordelbereich 23, der als normale Kordel ausgebildet ist. Am freien Endbereich des elastischen Teilbereichs 22 ist ein Nippel 28 umspritzt. Zwischen dem elastischen Teilbereich 22 und dem übrigen Kordelbereich 23 ist ein Anschlagring 26 umspritzt. Am freien Endbereich des übrigen Kordelbereiches 23 ist eine Anschlußeinheit 26 umspritzt, wobei diese Anschlußeinheit 26 so ausgebildet ist, daß sie an einer an der Heckklappe 44 des Fahrzeugs 40 vorhandenen Rasteinheit lösbar befestigbar ist.

Die Montage der Einzelteile geht wie folgt von statten:

Die Kordel 12 wird mit ihrem Nippel 28 an dem Grundelement 18 befestigt, was beispielsweise durch Einhängen in in den Figuren nicht dargestellte Befestigungsstifte möglich ist. Die Befestigung erfolgt hierbei im wesentlichen im Zentrum der spiralförmigen Wandung. Der elastische Teilbereich wird so in die spiralförmigen durch die Wandung gebildeten Führungsrinnen 25 eingelegt, daß auch der übrige Kordelbereich 23 in dieser Geometrie aufgenommen wird. Nur noch die Anschlußeinheit 14 ragt aus dem Gehäuse 16 bzw. dem Grundelements 18 heraus. Zuletzt wird das Deckelelement 20 aufgerastet.

Die Montage im Fahrzeug läuft wie folgt ab:

Die eigentliche Vorrichtung 10 zum wegverzögernden Anheben der Hutablage, das aus dem Grundelement 18, der Kordel 12 und dem Deckelelement 20 besteht, wird komplett montiert an den Kunden geliefert und von diesem unterseitig in einem an der Hutablage befestigten Halter, der in den Figuren 1 und 2 nicht näher dargestellt ist, eingerastet. Die Kordel 12 mit ihrer Anschlußeinheit ragt aus dem Gehäuse 16 heraus und wird durch eine Öffnung in der Hutablage 42 in die Fahrgastzelle geführt. Zur Abdeckung dieser Öffnung wird ein in den Figuren 2 und 3 nicht näher dargestellter Pin von der Fahrgastseite aus durch die Hutablage 42 hindurch in das Grundelement 18 der Vorrichtung 10 (Aufrollautomatik) eingerastet. Die Anschlußeinheit wird in einen Bolzen, der an der Heckklappe 44 befestigt ist, gerastet.

Die Funktion läuft im einzelnen wie folgt ab:

Durch den elastischen Teilbereich wird die Kordel 12 gänzlich in die Vorrichtung 10 eingezogen und kann herausgezogen werden. Die Befestigungseinheit an der Heckklappe 44 des Fahrzeugs 40 sitzt über der Hutablage 42. Beim Öffnen der Heckklappe 44 bleibt die Hutablage 42 so lange im Ruhezustand liegen (Fig. 1a), bis die in der Aufrollautomatik 10 verbleibende restliche Kordellänge bis zum Anschlagen des Anschlagringes 26 an der Wandung des Grundelementes 18 ausgezogen wurde. Ab diesem Zeitpunkt wird die Hutablage bei weiterem Schwenken der Heckklappe um ihre Drehachse 43 verschwenkt. Beim Schließen der Heckklappe 44 wird die Hutablage 42 erst in Ruhestellung abgelegt, dann wird die Kordel 12 durch die Kraft des elastischen Teilbereichs 22 wieder auf die Ausgangslänge in das Gehäuse 16 hineingezogen. Soll die Hutablage 42 aus dem Fahrzeug 40 entfernt werden, so muß die Anschlußeinheit 14 aus der Befestigungseinheit an der Heckklappe 44 herausgerastet werden. Der elastische Teilbereich 22 zieht dann die Kordel 12 gänzlich bis in Ruhestellung in das Innere des Gehäuses 16 ein.

## Patentansprüche

1. Aufrollvorrichtung (10) zum wegverzögernden Anheben einer um eine Achse schwenkbare Hutablage (42) eines Fahrzeuges (40) beim Öffnen der Heckklappe (44) mit einer an der Hutablage (42) des Fahrzeuges (40) und an der Heckklappe (44) des Fahrzeugs (40) befestigbaren Kordel (12) mit einer Anschlußeinheit (14) zum lösbaren Befestigen der Kordel (12) an der Heckklappe (44) des Fahrzeugs (40), wobei die Kordel (12) in einem an der Hutablage (42) befestigbaren Gehäuse (16) herausziehbar und zwar entgegen der Wirkung von elastischen Mitteln (22) angeordnet ist, die Kordel (12) einen elastischen Teilbereich (22) besitzt, der die elastischen Mittel bildet und der elastische Teilbereich (22) in dem der Anschlußeinheit (14) gegenüberliegenden Endbereich der Kordel (12) vorhanden ist,
**dadurch gekennzeichnet**, daß
- im Innern des Gehäuses (16) eine Umlenkeinrichtung (24) für die Kordel (12) angeordnet ist und
- die Länge/Federkraft des elastischen Teilbereiches (22) so ausgebildet ist, daß die Kordel (12) bei nicht montierter Vorrichtung (10) in das Gehäuseinnere und um die Umlenkeinrichtung (24) herum bis zu einem Anschlag der Anschlußeinheit (14) eingezogen ist.

2. Vorrichtung (10) nach Anspruch 1,
**dadurch gekennzeichnet**, daß
die Umlenkeinrichtung (24) eine ebene, spiralförmig verlaufende Wandung besitzt,
- in den durch die spiralförmige Wandung gebildeten Führungsrinnen (25) die Kordel (12) angeordnet ist und
- der elastische Teilbereich (22) im wesentlichen im Zentrum des spiralförmigen Wandungsverlaufs verankert ist.

3. Vorrichtung (10) nach Anspruch 1 und/oder 2,
**dadurch gekennzeichnet**, daß
im Übergangsbereich des elastischen Teilbereiches (22) der Kordel (12) zum übrigen Bereich (23) der Kordel (12) eine Anschlageinheit (26) angeordnet ist, die die maximale Ausziehlänge der Kordel (12) begrenzt.

4. Vorrichtung (10) nach Anspruch 3,
**dadurch gekennzeichnet**, daß
die Anschlageinheit (26) als Anschlagring ausgebildet ist.

5. Vorrichtung (10) nach einem oder mehreren der vorstehenden Ansprüche,
**dadurch gekennzeichnet**, daß
die Verankerung der Kordel (12) im Gehäuse (16) über einen einrastbaren Nippel (28), insbesondere umspritzten Nippel (28), erfolgt.

6. Vorrichtung (10) nach einem oder mehreren der vorstehenden Ansprüche,
**dadurch gekennzeichnet**, daß
das Gehäuse (16) zweiteilig, nämlich ein Grundelement (18) und eine Deckelelement (20) aufweisend, ausgebildet ist.

7. Vorrichtung (10) nach Anspruch 6,
**dadurch gekennzeichnet**, daß
das Deckelelement (20) einrastbar am Grundelement (18) ausgebildet ist.

8. Vorrichtung (10) nach einem oder mehreren der vorstehenden Ansprüche,
**dadurch gekennzeichnet**, daß
das Gehäuse (16) als Kunststoffbauteil, insbesondere gespritztes Kunststoffbauteil, ausgebildet ist.

9. Vorrichtung (10) nach einem oder mehreren der vorstehenden Ansprüche,
**dadurch gekennzeichnet**, daß
die Vorrichtung (10) unterseitig an der Hutablage (42) des Fahrzeugs (40) befestigbar ist.

10. Vorrichtung nach Anspruch 9,
**dadurch gekennzeichnet**, daß
die Vorrichtung an einer Halteeinrichtung an der Hutablage des Fahrzeugs befestigbar, insbesondere einrastbar oder einschweißbar, ausgebildet ist.

11. Vorrichtung nach einem oder mehreren der Ansprüche 1 bis 10,
**dadurch gekennzeichnet**, daß
die Umlenkeinrichtung beabstandet untereinander angeordneten Vorsprungseinheiten besitzt, um die die Kordel herumführbar ist.

## Claims

1. Reeling device (10) for the delayed lifting of a rear parcel shelf (42), pivotable about an axis, of a vehicle (40) when opening the tailgate (44), having a cord (12) which can be fastened to the rear parcel shelf (42) of the vehicle (40) and to the tailgate (44) of the vehicle (40) and which has a connection unit (14) for the detachable fastening of the cord (12) to the tailgate (44) of the vehicle (40), the cord (12) being arranged in a housing (16), which can be fastened to the rear parcel shelf (42), in such a way that it can be pulled out of said housing (16), specifically against the action of elastic means (22), the cord (12) having an elastic section (22), which forms the elastic means, and the elastic section (22) being present in that end region of the cord (12) which is opposite the connection unit (14),
characterized in that
- a deflection device (24) for the cord (12) is arranged in the interior of the housing (16), and
- the length/spring force of the elastic section (22) is designed in such a way that the cord (12), when the device (10) is not installed, is drawn into the housing interior and around the deflection device (24) up to a stop of the connection unit (14).

2. Device (10) according to Claim 1, characterized in that the deflection device (24) has a smooth, spiral wall,
- the cord (12) is arranged in the guide channels (25) formed by the spiral wall,
- and the elastic section (22) is anchored essentially in the centre of the spiral wall shape.

3. Device (10) according to Claim 1 and/or 2, characterized in that a stop unit (26), which limits the maximum pull-out length of the cord (12), is arranged in the transition region between the elastic section (22) of the cord (12) and the remaining region (23) of the cord (12).

4. Device (10) according to Claim 3, characterized in that the stop unit (26) is designed as a stop ring.

5. Device (10) according to one or more of the preceding claims, characterized in that the cord (12) is anchored in the housing (16) via a snap-in nipple (28), in particular a nipple (28) encapsulated by moulding.

6. Device (10) according to one or more of the preceding claims, characterized in that the housing (16) is of two-piece design, namely having a base element (18) and a lid element (20).

7. Device (10) according to Claim 6, characterized in that the lid element (20) is designed such that it can be snapped into place on the base element (18).

8. Device (10) according to one or more of the preceding claims, characterized in that the housing (16) is designed as a plastic component, in particular an injection-moulded plastic component.

9. Device (10) according to one or more of the preceding claims, characterized in that the device (10) can be fastened to the underside of the rear parcel shelf (42) of the vehicle (40).

10. Device according to Claim 9, characterized in that the device is designed such that it can be fastened, in particular snapped into place or welded in place, on a holding device on the rear parcel shelf of the vehicle.

11. Device according to one or more of Claims 1 to 10, characterized in that the deflection device has projection units, which are arranged at a distance from one another and around which the cord can be guided.

## Revendications

1. Dispositif d'enroulement (10) pour le soulèvement temporisé d'une plage arrière (42) d'un véhicule (40), pivotante autour d'un axe lors de l'ouverture du hayon arrière (44) muni d'un cordon (12) pouvant être fixé sur la plage arrière (42) du véhicule (40) et sur le hayon arrière (44) du véhicule (40), et d'une unité de raccordement (14) pour la fixation amovible du cordon (12) sur le hayon arrière (44) du véhicule (40), le cordon (12) étant placé dans un boîtier (16) pouvant être fixé sur la plage arrière (42) de façon à pouvoir être retiré, à savoir contre l'effet de moyens élastiques (22), le cordon (12) possédant une partie élastique (22) formant les moyens élastiques et la partie élastique (22) existant dans l'extrémité terminale opposée à l'unité de raccordement (14), **caractérisé en ce**
- **qu'**un dispositif de renvoi (24) du cordon (12) est placé à l'intérieur du boîtier (16) et
- **que** la longueur/élasticité de la partie élastique (22) est formée de telle sorte que le cordon (12) est rentré dans l'intérieur du boîtier lorsque le dispositif (10) n'est pas monté et enroulé autour du dispositif de renvoi (24) jusqu'à une butée de l'unité de raccordement (14).

2. Dispositif (10) selon la revendication 1, **caractérisé en ce que** le dispositif de renvoi (24) possède une paroi plane s'étendant en forme de spirale,
- le cordon (12) étant placé dans les rainures de guidage (25) formées par la paroi en forme de spirale et
- la partie élastique (22) étant ancrée principalement au centre de la paroi en forme de spirale.

3. Dispositif (10) selon la revendication 1 et/ou 2, **caractérisé en ce** qu'une unité de butée (26) est placée dans la partie de transition entre la partie élastique (22) du cordon (12) et la partie restante (23) du cordon (12), cette unité de butée limitant la longueur de sortie du cordon (12).

4. Dispositif (10) selon la revendication 3, **caractérisé en ce que** l'unité de butée (26) est formée comme anneau de butée.

5. Dispositif (10) selon l'une ou plusieurs des revendications précédentes, **caractérisé en ce que** la fixation du cordon (12) dans le boîtier (16) est réalisée à l'aide d'un raccord (28) encliquetable, notamment un raccord (28) surmoulé.

6. Dispositif (10) selon l'une ou plusieurs des revendications précédentes, **caractérisé en ce que** le boîtier (16) est formé de deux parties, à savoir un élément de base (18) et un élément de couvercle (20).

7. Dispositif (10) selon la revendication 6, **caractérisé en ce que** l'élément de couvercle (20) est formé de façon encliquetable sur l'élément de base (18).

8. Dispositif (10) selon l'une ou plusieurs des revendications précédentes, **caractérisé en ce que** le boîtier (16) est formé comme pièce en plastique, notamment comme pièce en plastique moulé.

9. Dispositif (10) selon l'une ou plusieurs des revendications précédentes, **caractérisé en ce que** le dispositif (10) peut être fixé du côté inférieur de la plage arrière (42) du véhicule (40).

10. Dispositif (10) selon la revendication 9, **caractérisé en ce que** le dispositif est formé de façon à pouvoir être fixé sur un dispositif de maintien sur la plage arrière du véhicule, notamment de façon encliquetable ou soudable.

11. Dispositif (10) selon l'une ou plusieurs des revendications 1 à 10, **caractérisé en ce que** le dispositif de renvoi possède des unités en saillie distantes les unes des autres, autour desquelles le cordon (12) peut être enroulé et guidé.
